# EUROPEAN PATENT SPECIFICATION

(11) **EP 3 652 939 B1**
(45) Date of publication and mention of the grant of the patent: **18.02.2026**
(21) Application number: 18714945.5
(22) Date of filing: 16.03.2018
(51) Int. Cl.: H04N 19/593, H04N 19/105, H04N 19/176, H04N 19/147

(54) **COMPOUND INTRA PREDICTION FOR VIDEO CODING**
COMPOUND-INTRAPRÄDIKTION ZUR VIDEOCODIERUNG
PRÉDICTION INTRA COMBINÉE POUR CODAGE VIDÉO

(30) Priority: 11.07.2017 US 201715646312
(43) Date of publication of application: 20.05.2020
(73) Proprietor: Google LLC, Mountain View, CA 94043 (US)
(72) Inventor: LIU, Yuxin, Mountain View California 94043 (US); SU, Hui, Mountain View California 94043 (US)
(74) Representative: Marks & Clerk GST
(86) International application number: PCT/US2018/022796
(87) International publication number: WO 2019/013843

(56) References cited:
- EP-A1- 2 202 986
- EP-A1- 2 202 986
- EP-A1- 3 099 070
- CONGXIA DAI ET AL: "Geometry-Adaptive Block Partitioning for Intra Prediction in Image & Video Coding", IMAGE PROCESSING, 2006 IEEE INTERNATIONAL CONFERENCE ON, vol. 6, 1 September 2007 (2007-09-01), pages VI - 85, XP055561728, ISSN: 1522-4880, DOI: 10.1109/ICIP.2007.4379527
- CONGXIA DAI ET AL: "Geometry-Adaptive Block Partitioning for Intra Prediction in Image & Video Coding", IMAGE PROCESSING, 2006 IEEE INTERNATIONAL CONFERENCE ON, vol. 6, 1 September 2007 (2007-09-01), pages VI - 85, XP055561728, ISSN: 1522-4880, DOI: 10.1109/ICIP.2007.4379527
- SHIODERA T ET AL: "TE6 subset a: Bidirectional intra prediction", 94. MPEG MEETING; 11-10-2010 - 15-10-2010; GUANGZHOU; (MOTION PICTURE EXPERT GROUP OR ISO/IEC JTC1/SC29/WG11),, no. M18102, 9 October 2010 (2010-10-09), XP030046692
- YAN YE ET AL: "Improved h.264 intra coding based on bi-directional intra prediction, directional transform, and adaptive coefficient scanning", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 October 2008 (2008-10-12), pages 2116 - 2119, XP031374452, ISBN: 978-1-4244-1765-0
- SHIODERA T ET AL: "CE6 Subset A: Bidirectional intra prediction (JCTVC-C079)", 95. MPEG MEETING; 24-1-2011 - 28-1-2011; DAEGU; (MOTION PICTURE EXPERT GROUP OR ISO/IEC JTC1/SC29/WG11),, no. m18859, 20 January 2011 (2011-01-20), XP030047428

## Description

### BACKGROUND

Digital video streams may represent video using a sequence of frames or still images. Digital video can be used for various applications including, for example, video conferencing, high definition video entertainment, video advertisements, or sharing of user-generated videos. A digital video stream can contain a large amount of data and consume a significant amount of computing or communication resources of a computing device for processing, transmission, or storage of the video data. Various approaches have been proposed to reduce the amount of data in video streams, including encoding or decoding techniques.

SHIODERA T ET AL: "TE6 subset a: Bidirectional intra prediction", 94, MPEG MEETING; 11-10-2010 - 15-10-2010; GUANGZHOU; (MOTION PICTURE EXPERT GROUP OR ISO/IEC JTC1/SC29/ WG11), no. M18102, 9 October 2010 (2010-10-09) describes "WBP (Weighted Bidirectional Prediction)" in which two unidirectional intra predictions results are combined by a weighted sum according to the distance between the predicted pixel and the reference pixel(s) used for prediction.

YAN YE ET AL: "Improved h.264 intra coding based on bidirectional intra prediction, directional transform, and adaptive coefficient scanning", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 October 2008 (2008-10-12), pages 2116-2119 describes that "Bi-directional Intra Prediction" (BIP) combines prediction blocks from two prediction modes using a weighting matrix.

SHIODERA T ET AL: "CE6 Subset A: Bidirectional intra prediction (JCTVC-0079)", 95. MPEG MEETING; 24-1-2011 - 28-1-2011; DAEGU; (MOTION PICTURE EXPERT GROUP OR ISO/IEC JTC1/SC29/WG11)" no. m18859, 20 January 2011 describes "Bidirectional Intra Prediction" (BIP) as a spatial prediction scheme for intra coding. BIP combines two unidirectional intra predictions results by a weighted sum according to the distance between the predicted pixel and the reference pixel(s) used for prediction.

EP 2 202 986 state describes an adaptive frame prediction method that includes: using at least one block partition method to partition an MB that needs to perform intra-frame prediction; using at least one prediction mode to predict each sub-block in each block partition result and obtaining a sub-block residual of a current sub-block; selecting multiple transformation methods according to the sub-block type to transform each sub-block residual and obtain the code-rate distortion ratio of the current sub-block; performing frame prediction for the MB according to the block partition method, the prediction mode, and the transformation method corresponding to the code-rate distortion ratio of a minimum value among all code-rate distortion ratios.

CONGXIA DAI ET AL: "Geometry-Adaptive Block Partitioning for Intra Prediction in Image & Video Coding", IMAGE PROCESSING, 2006 IEEE INTERNATIONAL CONFERENCE ON, vol. 6, 1 September 2007 (2007-09-01), pages VI-85 describes the use of geometry-adaptive intra models, where wedgelet like discontinuities are used in order to define separate coding regions where different statistical/waveform modeling tools can be used.

EP3099070 indicates that a temporal motion vector predictor is includable, together with one or more spatial motion vector predictors, in a set of motion vector predictors for a block to encode of a current frame. A method of determining the temporal motion vector predictor comprises selecting as the temporal predictor one motion vector from among motion vectors in a reference block of a reference frame different from the current frame.

### SUMMARY

Various aspects of the present invention are defined in the independent claims. Some preferred features are defined in the dependent claims

### BRIEF DESCRIPTION OF THE DRAWINGS

The description herein makes reference to the accompanying drawings described below, wherein like reference numerals refer to like parts throughout the several views.
FIG. 1 is a schematic of a video encoding and decoding system.
FIG. 2 is a block diagram of an example of a computing device that can implement a transmitting station or a receiving station.
FIG. 3 is a diagram of a typical video stream to be encoded and subsequently decoded.
FIG. 4 is a block diagram of an encoder according to implementations of this disclosure.
FIG. 5 is a block diagram of a decoder according to implementations of this disclosure.
FIG. 6 is a flowchart diagram of an example of a technique for coding a block of a video frame using compound intra prediction.
FIG. 7 is a block diagram of an example of an apparatus for coding a block of a video frame using compound intra prediction.
FIGS. 8A-D are diagrams of examples of blocks divided into partitions for coding using compound intra prediction.

### DETAILED DESCRIPTION

Video compression schemes may include breaking respective images, or frames, into smaller portions, such as blocks, and generating an encoded bitstream using techniques to limit the information included for respective blocks thereof. The encoded bitstream can be decoded to re-create the source images from the limited information. Encoding blocks to or decoding blocks from a bitstream can include predicting the motion within those blocks based on spatial similarities with other blocks in the same frame. Those spatial similarities can be determined using one or more intra-prediction modes. Intra-prediction modes attempt to predict the pixel values of a block using pixels peripheral to the block (e.g., pixels that are in the same frame as the block, but which are outside the block). The result of an intra-prediction mode performed against a block is a prediction block. A prediction residual can be determined based on a difference between the pixel values of the block and the pixel values of the prediction block. The prediction residual can be encoded or decoded, for example, as part of producing an encoded bitstream or output video stream.

There may be multiple intra-prediction modes available for predicting the motion of a block. For example, different intra-prediction modes can be used to perform prediction along different directions with respect to the pixel values of a block to be coded. The intra-prediction modes usable for predicting the motion of the block may be configured to prediction motion in one such direction. However, a block to be coded may be more optimally coded using a combination of intra-prediction modes. For example, motion of the block may be along multiple directions such that the use of a single intra-prediction mode may not effectively predict the motion. This may result in blocking artefacts within an output video stream, such as because the prediction residual encoded using the single intra-prediction mode did not account for motion along other directions.

Implementations of this disclosure include using compound intra prediction to encode or decode blocks of video frames. First and second intra-prediction modes are selected based on motion within the video frame. For example, rate-distortion values resulting from predicting the motion can be determined for combinations of intra-prediction modes. In other words, for each of one or more (e.g., a plurality of) different combinations of intra-prediction modes, a respective rate-distortion value resulting from predicting the motion within the video frame using that combination of intra-prediction modes can be determined. The combination including the first and second intra-prediction modes can be selected based on it resulting in the lowest rate-distortion value. A compound prediction block is generated by combining first and second prediction blocks respectively generated using the first and second intra-prediction modes. For example, combining the first and second prediction blocks can include weighting the pixel values of the first and second prediction blocks or using each of those intra-prediction modes with different partitions of the block to be encoded or decoded. That block is then encoded or decoded using the compound prediction block.

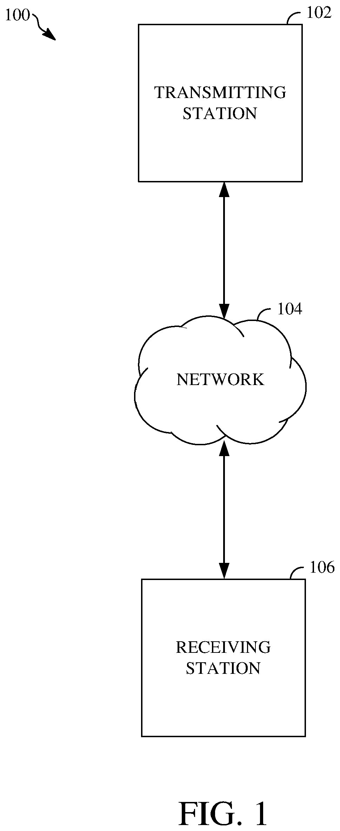

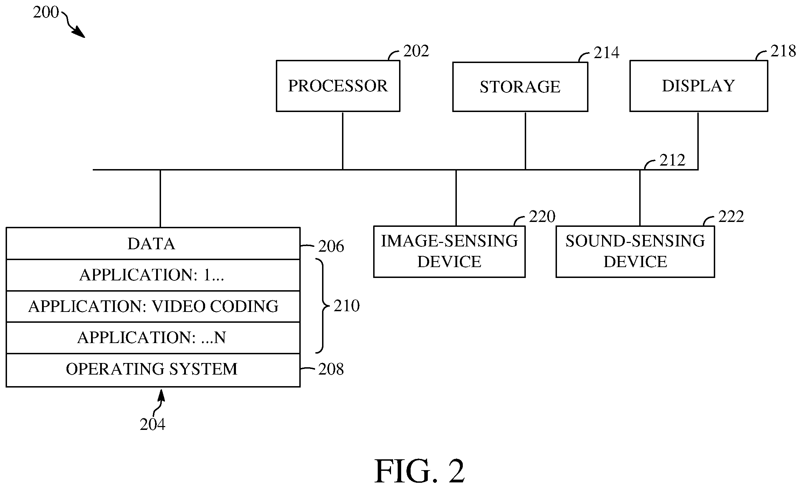

Further details of techniques for video coding using compound intra-prediction are described herein with initial reference to a system in which they can be implemented. FIG. 1 is a schematic of a video encoding and decoding system 100. A transmitting station 102 can be, for example, a computer having an internal configuration of hardware such as that described in FIG. 2. However, other implementations of the transmitting station 102 are possible. For example, the processing of the transmitting station 102 can be distributed among multiple devices.

A network 104 can connect the transmitting station 102 and a receiving station 106 for encoding and decoding of the video stream. Specifically, the video stream can be encoded in the transmitting station 102, and the encoded video stream can be decoded in the receiving station 106. The network 104 can be, for example, the Internet. The network 104 can also be a local area network (LAN), wide area network (WAN), virtual private network (VPN), cellular telephone network, or any other means of transferring the video stream from the transmitting station 102 to, in this example, the receiving station 106.

The receiving station 106, in one example, can be a computer having an internal configuration of hardware such as that described in FIG. 2. However, other suitable implementations of the receiving station 106 are possible. For example, the processing of the receiving station 106 can be distributed among multiple devices.

Other implementations of the video encoding and decoding system 100 are possible. For example, an implementation can omit the network 104. In another implementation, a video stream can be encoded and then stored for transmission at a later time to the receiving station 106 or any other device having memory. In one implementation, the receiving station 106 receives (e.g., via the network 104, a computer bus, and/or some communication pathway) the encoded video stream and stores the video stream for later decoding. In an example implementation, a real-time transport protocol (RTP) is used for transmission of the encoded video over the network 104. In another implementation, a transport protocol other than RTP may be used. e.g., a Hypertext Transfer Protocol (HTTP) based video streaming protocol.

When used in a video conferencing system, for example, the transmitting station 102 and/or the receiving station 106 may include the ability to both encode and decode a video stream as described below. For example, the receiving station 106 could be a video conference participant who receives an encoded video bitstream from a video conference server (e.g., the transmitting station 102) to decode and view and further encodes and transmits his or her own video bitstream to the video conference server for decoding and viewing by other participants.

FIG. 2 is a block diagram of an example of a computing device 200 that can implement a transmitting station or a receiving station. For example, the computing device 200 can implement one or both of the transmitting station 102 and the receiving station 106 of FIG. 1. The computing device 200 can be in the form of a computing system including multiple computing devices, or in the form of one computing device, for example, a mobile phone, a tablet computer, a laptop computer, a notebook computer, a desktop computer, and the like.

A processor 202 in the computing device 200 can be a conventional central processing unit. Alternatively, the processor 202 can be another type of device, or multiple devices, capable of manipulating or processing information now existing or hereafter developed. For example, although the disclosed implementations can be practiced with one processor as shown (e.g., the processor 202), advantages in speed and efficiency can be achieved by using more than one processor.

A memory 204 in computing device 200 can be a read only memory (ROM) device or a random access memory (RAM) device in an implementation. However, other suitable types of storage device can be used as the memory 204. The memory 204 can include code and data 206 that is accessed by the processor 202 using a bus 212. The memory 204 can further include an operating system 208 and application programs 210, the application programs 210 including at least one program that permits the processor 202 to perform the techniques described herein. For example, the application programs 210 can include applications 1 through N, which further include a video coding application that performs the techniques described herein. The computing device 200 can also include a secondary storage 214, which can, for example, be a memory card used with a mobile computing device. Because the video communication sessions may contain a significant amount of information, they can be stored in whole or in part in the secondary storage 214 and loaded into the memory 204 as needed for processing.

The computing device 200 can also include one or more output devices, such as a display 218. The display 218 may be, in one example, a touch sensitive display that combines a display with a touch sensitive element that is operable to sense touch inputs. The display 218 can be coupled to the processor 202 via the bus 212. Other output devices that permit a user to program or otherwise use the computing device 200 can be provided in addition to or as an alternative to the display 218. When the output device is or includes a display, the display can be implemented in various ways, including by a liquid crystal display (LCD), a cathode-ray tube (CRT) display, or a light emitting diode (LED) display, such as an organic LED (OLED) display.

The computing device 200 can also include or be in communication with an image-sensing device 220, for example, a camera, or any other image-sensing device 220 now existing or hereafter developed that can sense an image such as the image of a user operating the computing device 200. The image-sensing device 220 can be positioned such that it is directed toward the user operating the computing device 200. In an example, the position and optical axis of the image-sensing device 220 can be configured such that the field of vision includes an area that is directly adjacent to the display 218 and from which the display 218 is visible.

The computing device 200 can also include or be in communication with a sound-sensing device 222, for example, a microphone, or any other sound-sensing device now existing or hereafter developed that can sense sounds near the computing device 200. The sound-sensing device 222 can be positioned such that it is directed toward the user operating the computing device 200 and can be configured to receive sounds, for example, speech or other utterances, made by the user while the user operates the computing device 200.

Although FIG. 2 depicts the processor 202 and the memory 204 of the computing device 200 as being integrated into one unit, other configurations can be utilized. The operations of the processor 202 can be distributed across multiple machines (wherein individual machines can have one or more processors) that can be coupled directly or across a local area or other network. The memory 204 can be distributed across multiple machines such as a network-based memory or memory in multiple machines performing the operations of the computing device 200. Although depicted here as one bus, the bus 212 of the computing device 200 can be composed of multiple buses. Further, the secondary storage 214 can be directly coupled to the other components of the computing device 200 or can be accessed via a network and can comprise an integrated unit such as a memory card or multiple units such as multiple memory cards. The computing device 200 can thus be implemented in a wide variety of configurations.

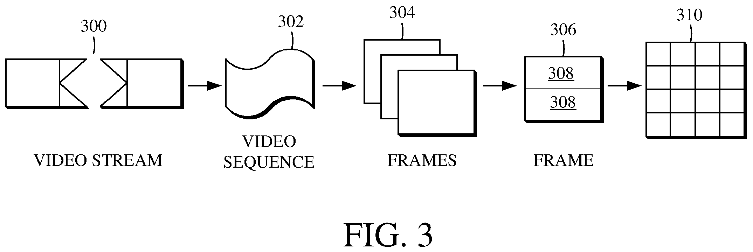

FIG. 3 is a diagram of an example of a video stream 300 to be encoded and subsequently decoded. The video stream 300 includes a video sequence 302. At the next level, the video sequence 302 includes a number of adjacent frames 304. While three frames are depicted as the adjacent frames 304, the video sequence 302 can include any number of adjacent frames 304. The adjacent frames 304 can then be further subdivided into individual frames, for example, a frame 306. At the next level, the frame 306 can be divided into a series of planes or segments 308. The segments 308 can be subsets of frames that permit parallel processing, for example. The segments 308 can also be subsets of frames that can separate the video data into separate colors. For example, a frame 306 of color video data can include a luminance plane and two chrominance planes. The segments 308 may be sampled at different resolutions.

Whether or not the frame 306 is divided into segments 308, the frame 306 may be further subdivided into blocks 3 10, which can contain data corresponding to, for example, 16x16 pixels in the frame 306. The blocks 310 can also be arranged to include data from one or more segments 308 of pixel data. The blocks 310 can also be of any other suitable size such as 4x4 pixels, 8x8 pixels, 16x8 pixels, 8x16 pixels, 16x16 pixels, or larger. Unless otherwise noted, the terms block and macroblock are used interchangeably herein.

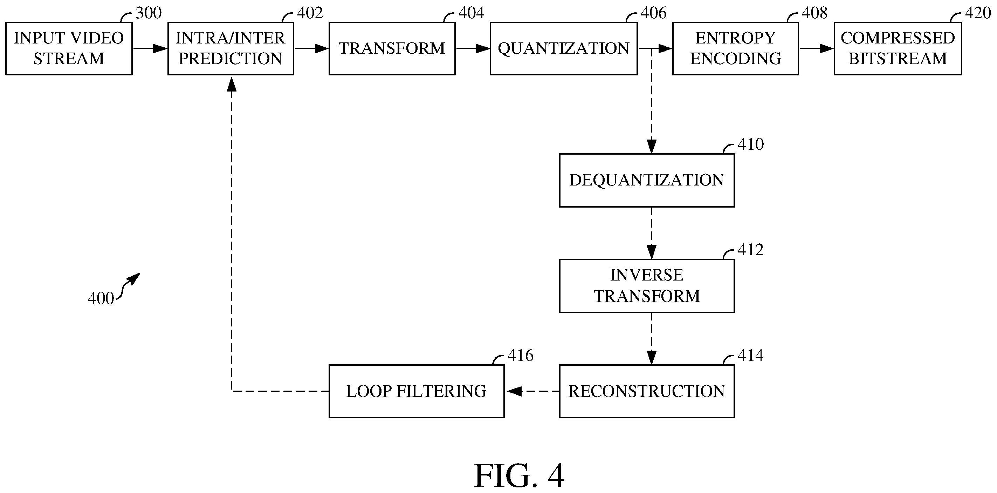

FIG. 4 is a block diagram of an encoder 400 according to implementations of this disclosure. The encoder 400 can be implemented, as described above, in the transmitting station 102, such as by providing a computer software program stored in memory, for example, the memory 204. The computer software program can include machine instructions that, when executed by a processor such as the processor 202, cause the transmitting station 102 to encode video data in the manner described in FIG. 4. The encoder 400 can also be implemented as specialized hardware included in, for example, the transmitting station 102. In one particularly desirable implementation, the encoder 400 is a hardware encoder.

The encoder 400 has the following stages to perform the various functions in a forward path (shown by the solid connection lines) to produce an encoded or compressed bitstream 420 using the video stream 300 as input: an intra/inter prediction stage 402, a transform stage 404, a quantization stage 406, and an entropy encoding stage 408. The encoder 400 may also include a reconstruction path (shown by the dotted connection lines) to reconstruct a frame for encoding of future blocks. In FIG. 4, the encoder 400 has the following stages to perform the various functions in the reconstruction path: a dequantization stage 410, an inverse transform stage 412, a reconstruction stage 414, and a loop filtering stage 416. Other structural variations of the encoder 400 can be used to encode the video stream 300.

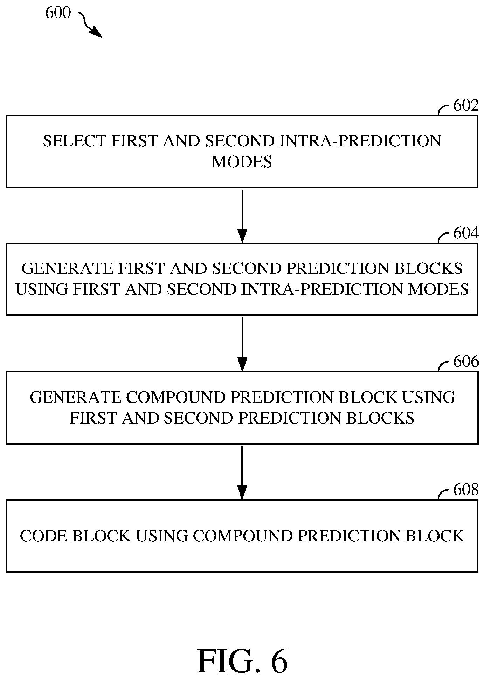

When the video stream 300 is presented for encoding, each of the adjacent frames 304, such as the frame 306, can be processed in units of blocks. At the intra/inter prediction stage 402, respective blocks can be encoded using intra-frame prediction (also called intra-prediction) or inter-frame prediction (also called inter-prediction). In any case, a prediction block can be formed. In the case of intra-prediction, a prediction block may be formed from samples in the current frame that have been previously encoded and reconstructed. For example, the intra/inter prediction stage 402 can include using compound intra prediction to encode a block of a video frame. Implementations for encoding blocks of video frames using compound intra prediction are described below with respect to FIGS. 6-8D. In the case of inter-prediction, a prediction block may be formed from samples in one or more previously constructed reference frames.

Next, still referring to FIG. 4, the prediction block can be subtracted from the current block at the intra/inter prediction stage 402 to produce a residual block (also called a residual). The transform stage 404 transforms the residual into transform coefficients in, for example, the frequency domain using block-based transforms. The quantization stage 406 converts the transform coefficients into discrete quantum values, which are referred to as quantized transform coefficients, using a quantizer value or a quantization level. For example, the transform coefficients may be divided by the quantizer value and truncated.

The quantized transform coefficients are then entropy encoded by the entropy encoding stage 408. The entropy-encoded coefficients, together with other information used to decode the block (which may include, for example, syntax elements such as used to indicate the type of prediction used, transform type, motion vectors, a quantizer value, or the like), are then output to the compressed bitstream 420. The compressed bitstream 420 can be formatted using various techniques, such as variable length coding (VLC) or arithmetic coding. The compressed bitstream 420 can also be referred to as an encoded video stream or encoded video bitstream, and the terms will be used interchangeably herein.

The reconstruction path in FIG. 4 (shown by the dotted connection lines) can be used to ensure that the encoder 400 and a decoder 500 (described below) use the same reference frames to decode the compressed bitstream 420. The reconstruction path performs functions that are similar to functions that take place during the decoding process (described below), including dequantizing the quantized transform coefficients at the dequantization stage 410 and inverse transforming the dequantized transform coefficients at the inverse transform stage 412 to produce a derivative residual block (also called a derivative residual). At the reconstruction stage 414, the prediction block that was predicted at the intra/inter prediction stage 402 can be added to the derivative residual to create a reconstructed block. The loop filtering stage 416 can be applied to the reconstructed block to reduce distortion such as blocking artifacts.

Other variations of the encoder 400 can be used to encode the compressed bitstream 420. In some implementations, a non-transform based encoder can quantize the residual signal directly without the transform stage 404 for certain blocks or frames. In some implementations, an encoder can have the quantization stage 406 and the dequantization stage 410 combined in a common stage.

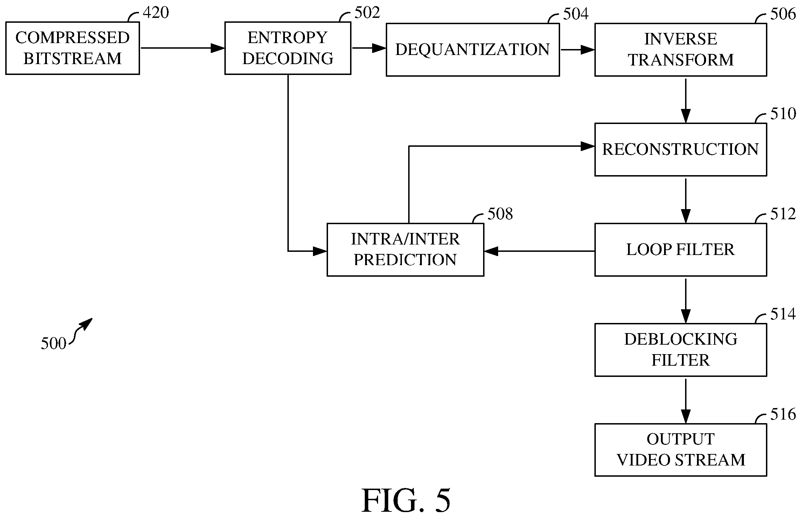

FIG. 5 is a block diagram of a decoder 500 according to implementations of this disclosure. The decoder 500 can be implemented in the receiving station 106, for example, by providing a computer software program stored in the memory 204. The computer software program can include machine instructions that, when executed by a processor such as the processor 202, cause the receiving station 106 to decode video data in the manner described in FIG. 5. The decoder 500 can also be implemented in hardware included in, for example, the transmitting station 102 or the receiving station 106.

The decoder 500, similar to the reconstruction path of the encoder 400 discussed above, includes in one example the following stages to perform various functions to produce an output video stream 516 from the compressed bitstream 420: an entropy decoding stage 502, a dequantization stage 504, an inverse transform stage 506, an intra/inter prediction stage 508, a reconstruction stage 510, a loop filtering stage 512, and a deblocking filtering stage 514. Other structural variations of the decoder 500 can be used to decode the compressed bitstream 420.

When the compressed bitstream 420 is presented for decoding, the data elements within the compressed bitstream 420 can be decoded by the entropy decoding stage 502 to produce a set of quantized transform coefficients. The dequantization stage 504 dequantizes the quantized transform coefficients (e.g., by multiplying the quantized transform coefficients by the quantizer value), and the inverse transform stage 506 inverse transforms the dequantized transform coefficients to produce a derivative residual that can be identical to that created by the inverse transform stage 412 in the encoder 400. Using header information decoded from the compressed bitstream 420, the decoder 500 can use the intra/inter prediction stage 508 to create the same prediction block as was created in the encoder 400, e.g., at the intra/inter prediction stage 402. For example, the intra/inter prediction stage 508 can include using compound intra prediction to decode an encoded block of an encoded video frame. Implementations for decoding encoded blocks of encoded video frames using compound intra prediction are described below with respect to FIGS. 6-8D.

At the reconstruction stage 510, the prediction block can be added to the derivative residual to create a reconstructed block. The loop filtering stage 512 can be applied to the reconstructed block to reduce blocking artifacts. Other filtering can be applied to the reconstructed block. In this example, the deblocking filtering stage 514 is applied to the reconstructed block to reduce blocking distortion, and the result is output as the output video stream 516. The output video stream 516 can also be referred to as a decoded video stream, and the terms will be used interchangeably herein. Other variations of the decoder 500 can be used to decode the compressed bitstream 420. In some implementations, the decoder 500 can produce the output video stream 516 without the deblocking filtering stage 514.

Referring next to FIG. 6, a technique for using compound intra prediction is described. FIG. 6 is a flowchart diagram of a technique 600 for coding a block of a video frame using compound intra prediction. The technique 600 can be implemented, for example, as a software program that may be executed by computing devices such as the transmitting station 102 or the receiving station 106. For example, the software program can include machine-readable instructions that may be stored in a memory such as the memory 204 or the secondary storage 214, and that, when executed by a processor, such as the processor 202, may cause the computing device to perform the technique 600. The technique 600 can be implemented using specialized hardware or firmware. As explained above, some computing devices may have multiple memories or processors, and the operations described in the technique 600 can be distributed using multiple processors, memories, or both.

The technique 600 may be performed by an encoder, for example, the encoder 400 shown in FIG. 4, or by a decoder, for example, the decoder 500 shown in FIG. 5. As such, references within the below descriptions of the technique 600 may include discussion of encoding a current block or decoding an encoded block. All or a portion of the technique 600 may be used to encode a current block or decode an encoded block. Therefore, references to "encoding the current block," or the like within the discussion of the technique 600 may also be wholly or partially relevant for the decoding process. Similarly, references to "decoding the encoded block," or the like within the discussion of the technique 600 may also be wholly or partially relevant for the encoding process.

At 602, two or more intra-prediction modes to use for coding a block of a video frame are selected based on motion within the video frame. For example, a first intra-prediction mode and a second intra-prediction mode may be selected. The intra-prediction modes that may be selected may be stored in a database, table, or other data store accessible by a hardware or software component performing the selecting. For example, a table may include records associated with the selectable intra-prediction modes. The different intra-prediction modes may be configured for prediction motion in different directions. Selecting the first and second intra-prediction modes may, for example, include reading or otherwise using information stored in records pertaining to those first and second intra-prediction modes.

The intra-prediction modes to use for coding the block may be selected based on a rate-distortion analysis performed with respect to combinations of the selectable intra-prediction modes. For example, the selecting may include determining respective rate-distortion values resulting from predicting the motion within the video frame including the block to be coded using different combinations of the intra-prediction modes. A rate-distortion value refers to a ratio that balances an amount of distortion (e.g., a loss in video quality) with rate (e.g., a number of bits) for coding a block or other video component. Determining a rate-distortion value for a combination of intra-prediction modes can include predicting motion of the block to be coded using that combination. The combination of intra-prediction modes resulting in a lowest one of the rate-distortion values can be determined such that the intra-prediction modes of that combination are selected.

For example, a combination including a first intra-prediction mode and a second intra-prediction mode may be selected by determining that such combination results in the lowest rate-distortion value determined based on the rate-distortion analysis. Rate-distortion values can be determined for every possible combination of the intra-prediction modes. Alternatively, a specified number of combinations may be identified such that the number of rate-distortion values determined is limited. The specified number of combinations may be configurable, such as by a user of an encoder or decoder. Alternatively, the specified number of combinations may be non-configurable, such as where it is set by default.

At 604, prediction blocks are generated using the selected intra-prediction modes. Generating a prediction block using a selected intra-prediction mode can include predicting motion of the block to be coded based on characteristics of the selected intra-prediction mode (e.g., use of neighbor motion information, direction, or the like). For example, when first and second intra-prediction modes are selected, a first prediction block can be generated using the first intra-prediction mode and a second prediction block can be generated using the second intra-prediction mode.

At 606, a compound prediction block is generated. The compound prediction block is generated by combining the prediction blocks generated using the selected intra-prediction modes. The compound prediction block may be some function of the generated prediction blocks. For example, where first and second intra-prediction blocks are generated, generating the compound prediction block can include combining the first and second intra-prediction blocks. The prediction blocks generated using the selected intra-prediction modes can be combined using one or more techniques. For example, the prediction blocks can be combined based on weights associated with the intra-prediction modes. In another example, the prediction blocks can be combined based on partitions of the block to be coded. Other examples for combining the prediction blocks may also be possible.

Combining the prediction blocks based on weights associated with the intra-prediction modes used to generate those prediction blocks includes determining weighted pixel values based on those weights. For example, where first and second prediction blocks are to be combined, the combining can include determining first weighted pixel values by applying a first weight to pixel values of the prediction block generated using the first intra-prediction mode and determining second weighted pixel values by applying a second weight to pixel values of the prediction block generated using the second intra-prediction mode. The first weighted pixel values and the second weighted pixel values are then averaged to generate the compound prediction block.

The weights associated with the intra-prediction modes can be specified, such as within a default configuration of an encoder or decoder used to code the block. Alternatively, the weights associated with the intra-prediction modes may be determined, for example, by a user of the encoder or decoder, according to probabilities indicating the use of those intra-prediction modes, based on the use of those intra-prediction modes to code neighbor blocks, or the like, or a combination thereof.

Combining the prediction blocks based on partitions of the block to be coded includes dividing the block to be coded into multiple partitions. Partitioning definitions indicating how to divide the block to be coded (e.g., the number, shapes, or sizes of partitions resulting therefrom) may be specified, such as within a configuration of an encoder or decoder used to code that block. Alternatively, information indicating how to divide that block into partitions may be indicated, for example, by a user of the encoder or decoder, based on partitions resulting from divisions of neighbor blocks, or the like. Portions of the prediction blocks corresponding to those partitions are then combined to generate the compound prediction block. For example, where first and second prediction blocks are to be combined, the combining can include dividing the block to be coded into a first partition and a second partition and combining a portion of the first prediction block corresponding to the first partition with a portion of the second prediction block corresponding to the second partition.

At 608, the block of the video frame is coded using the compound prediction block. During an encoding process (e.g., performed using an encoder, such as the encoder 400 shown in FIG. 4), coding the block using the compound prediction block can include encoding a current block using the compound prediction block, such as by encoding a prediction residual resulting from using the compound prediction block to a compressed bitstream. During a decoding process (e.g., performed using an decoder, such as the decoder 500 shown in FIG. 5), coding the block using the compound prediction block can include decoding an encoded block using the compound prediction block, such as by decoding a prediction residual resulting from using the compound prediction block to an output video stream.

For simplicity of explanation, the technique 600 is depicted and described as a series of steps or operations. However, the steps or operations in accordance with this disclosure can occur in various orders and/or concurrently. Additionally, other steps or operations not presented and described herein may be used. Furthermore, not all illustrated steps or operations may be required to implement a technique in accordance with the disclosed subject matter.

In some implementations, more than two intra-prediction modes may be used to generate the compound prediction block. For example, weighted pixels determined based on multiple weights for multiple prediction blocks can be averaged to combine those multiple prediction blocks. In another example, the current block may be partitioned into multiple partitions where the motion in respective partitions is predicted using corresponding portions of different intra-prediction blocks.

In some implementations, an encoder and a decoder may perform the technique 600 in different ways. For example, during a decoding process, selecting the intra-prediction modes to use to decode an encoded block can include decoding one or more syntax elements from an encoded bitstream. The one or more syntax elements can indicate the particular intra-prediction modes used for encoding the encoded block. For example, the one or more syntax elements may include bits encoded to a frame header of the encoded bitstream. The bits may refer to identifiers of the intra-prediction modes used to encode the encoded block. For example, those identifiers may be included in a table, database, or other data store that includes records associated with the intra-prediction modes that may be selected for encoding or decoding blocks.

In another example, during a decoding process, the compound prediction block can be generated using information encoded within the encoded bitstream including the encoded block to decode. For example, during a corresponding encoding process, an encoder can encode one or more syntax elements (e.g., to a header of the video frame including the block being encoded) indicating the weights associated with the intra-prediction modes used, the partitions by which the block is divided, or the like. This information can be received from the encoded bitstream and used to generate the compound prediction block.

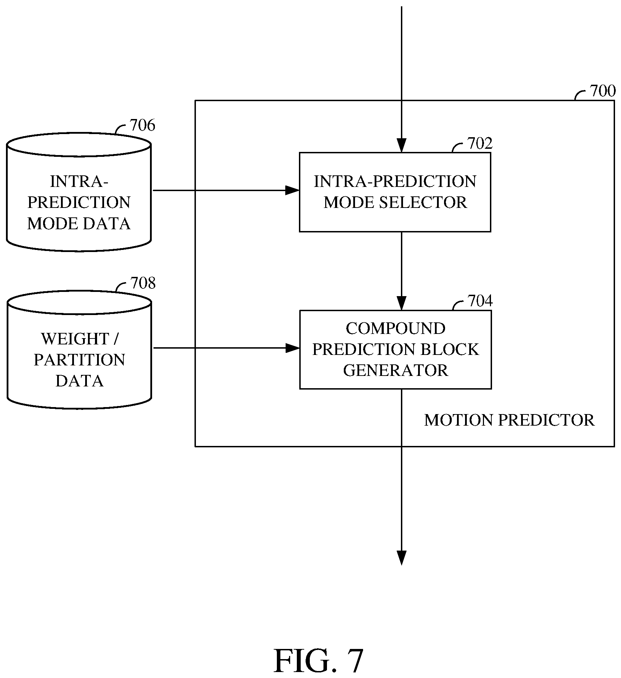

FIG. 7 is a block diagram of an example of an apparatus for coding a block of a video frame using compound intra prediction. The apparatus may, for example, be one of the transmitting station 102 or the receiving station 106 shown in FIG. 1. The apparatus includes a motion predictor 700. The motion predictor 700 is software including functionality for predicting the motion for a block of a video frame to be coded, such as by performing all or a portion of the technique 600 shown in FIG. 6. For example, the motion predictor 700 may include instructions or code for implementing the intra/inter prediction stage 402 shown in FIG. 4 or the intra/inter prediction stage 508 shown in FIG. 5. In another example, the motion predictor 700 may include instructions or code for implementing all or a portion of the reconstruction path shown in FIG. 4 (e.g., by the dotted connection lines therein).

The motion predictor 700 includes an intra-prediction mode selector 702 and a compound prediction block generator 704. The intra-prediction mode selector 702 is software including functionality for selecting two or more intra-prediction modes based on motion within a video frame including a block to be coded. The compound prediction block generator 704 is software including functionality for generating a compound prediction block by combining prediction blocks generated using the two or more intra-prediction modes selected using the intra-prediction mode selector 702. The intra-prediction mode selector 702 and the compound prediction block generator 704 may include portions of the instructions or code comprising the motion predictor 700.

The intra-prediction mode selector 702 selects the two or more intra-prediction modes using intra-prediction mode data 706. The intra-prediction mode data 706 can be stored in a database, table, or other data store including data used to identify intra-prediction modes available for predicting motion within the video frame including the block to be coded. The intra-prediction mode data 706 can, for example, include a table storing identifiers or other information for the intra-prediction modes usable by an encoder or decoder to respectively encode or decode the block. The information (which may be stored in the table) may include information indicating a particular technique, direction, or other characteristic, or combination thereof for predicting motion within the video frame. The different intra-prediction modes may be configured for prediction motion in different directions.

The intra-prediction mode selector 702 determines rate-distortion values resulting from predicting the motion within the video frame using combinations of the intra-prediction modes referenced by the intra-prediction mode data 706. That is, the intra-prediction mode selector 702 may select different combinations of the intra-prediction modes and perform a rate-distortion analysis to determine the combination resulting in the lowest rate-distortion value. A combination of the intra-prediction modes selected from the intra-prediction mode data 706 may include two or more of the intra-prediction modes referenced by the intra-prediction mode data 706. The intra-prediction mode selector 702 can determine a respective rate-distortion value for every possible combination of the intra-prediction modes. Alternatively, the intra-prediction mode selector 702 can determine rate-distortion values for a subset of the set of possible combinations of the intra-prediction modes, for example for a specified number of the possible combinations, which specified number may or may not be configurable.

Information indicating the intra-prediction modes that, when combined, result in the lowest rate-distortion value is passed along to the compound prediction block generator 704. The compound prediction block generator 704 generates a compound prediction block used for coding the block of the video frame by combining prediction blocks generated using ones of the intra-prediction modes selected using the intra-prediction mode selector 702. For example, where the intra-prediction mode selector 702 selects a first intra-prediction mode and a second intra-prediction mode (e.g., based on a combination of those first and second intra-prediction modes resulting in a lowest rate-distortion value), the compound prediction block generator 704 combines a first intra-prediction block generated using the first intra-prediction mode and a second intra-prediction block generated using the second intra-prediction mode to generate the compound prediction block. The compound prediction block may be a function of the prediction blocks generated using the selected intra-prediction modes.

Generating a prediction block using a selected intra-prediction mode can include using motion data associated with neighbor blocks of the block to be coded to predict the motion within that block to be coded. For example, previously-coded left and above neighbor blocks of the block to be coded can be used to derive the data usable for predicting the motion within the block to be coded. The prediction blocks associated with the selected intra-prediction modes can be generated by the compound prediction block generator 704. Alternatively, the prediction blocks associated with the selected intra-prediction modes can be generated by the intra-prediction mode selector 702. As yet another alternative, the prediction blocks associated with the selected intra-prediction modes can be generated by other software of or associated with the motion predictor 700.

The compound prediction block generator 704 uses weight/partition data 708 to generate the compound prediction block. The weight/partition data 708 can be stored in a database, table, or other data store including data used to identify weights associated with intra-prediction modes and/or techniques for partitioning the block to be coded based on intra-prediction modes, such as the intra-prediction modes associated with the intra-prediction mode data 706. For example, the weight/partition data 708 can include a first table storing weight data, which indicates the weights that have been associated with ones of the intra-prediction modes associated with the intra-prediction mode data 706. In another example, the weight/partition data 708 can include a second table storing partition data, which indicates how to partition a block to be coded using combinations of those intra-prediction modes.

The prediction blocks generated using the selected intra-prediction modes may be combined based on the weight data or the partition data. Combining the prediction blocks based on the weight data of the weight/partition data 708 can include determining weighted pixel values for each of those prediction blocks by applying respective weights indicated by the weight data to pixel values of those prediction blocks. For example, where first and second prediction blocks are generated (e.g., respectively based on first and second intra-prediction modes selected using the intra-prediction mode selector 702), combining the prediction blocks based on the weight data can include averaging first weighted pixel values determined for the first prediction block and second weighted pixel values determined for the second prediction block.

Combining the prediction blocks based on the partition data of the weight/partition data 708 can include dividing the block to be coded into multiple partitions and using corresponding partitions of the prediction blocks to form the compound prediction block. For example, where first and second prediction blocks are generated (e.g., respectively based on first and second intra-prediction modes selected using the intra-prediction mode selector 702), combining the prediction blocks based on the partition data can include dividing the block to be coded into a first partition and a second partition. A portion of the first prediction block corresponding to the first partition is combined with a portion of the second prediction block corresponding to the second partition to generate the compound prediction block.

Implementations of the apparatus shown in FIG. 7 may include additional, less, or different functionality than shown. In some implementations, the intra-prediction mode selector can select the intra-prediction modes to be passed along to the compound prediction block generator 704 based on data encoded within an encoded bitstream. For example, during a decoding process, an encoded bitstream is received, such as from an encoder, a server relaying the bitstream, or the like. The encoded bitstream may, for example, be the compressed bitstream 420 shown in FIG. 4. An encoded video frame of the encoded bitstream includes the encoded block to be decoded.

The encoded bitstream may also include one or more syntax elements indicating the intra-prediction modes used for encoding the encoded block. For example, those one or more syntax elements may be encoded to the encoded bitstream during an encoding process resulting in the encoded bitstream. The one or more syntax elements may, for example, include one or more bits used to identify the intra-prediction modes used to encode the encoded block. For example, the one or more bits can be included in a query of the intra-prediction mode data 706. The query can return the intra-prediction modes associated with those one or more bits, for example, where the identifiers of those intra-prediction modes are referenced using those one or more bits.

In some implementations, the data used by the motion predictor 700 may be stored in more or fewer databases, tables, or other data stores than as described above. For example, the intra-prediction mode data 706 and the weight/partition data 708 may be stored in the same database, table, set of tables, or other data store. In another example, separate databases, tables, or other data stores may be used to store different subsets of the weight/partition data 708. For example, a first database, table, set of tables, or other data store may be used to store the weight data of the weight/partition data 708 and a different database, table, set of tables, or other data store may be used to store the partition data of the weight/partition data 708.

In some implementations, the apparatus described with respect to FIG. 7 may be one component of a system for coding blocks of video frames using compound intra prediction. A system for coding blocks of video frames using compound intra prediction may include one or more computing devices, such as the computing device 200 shown in FIG. 2. For example, one computing device may be a transmitting station, such as the transmitting station 102 shown in FIG. 1. Another computing device may be a receiving station, such as the receiving station 106 shown in FIG. 1. Another computing device may be a computing device for communicating data between the transmitting station and the receiving station, such as a server device associated with a network, such as the network 104 shown in FIG. 1.

In another example, one or more computing devices can be used to encode the blocks using compound intra prediction and one or more other computing devices can be used to decode those encoded blocks. For example, each of the transmitting station and the receiving station may use another computing device as part of a process for encoding blocks using compound intra prediction, such as a device on which one or both of the intra-prediction mode data or the weight/partition data is stored. The transmitting station and the receiving station may use the same or a different computing device for the respective encoding or decoding operations.

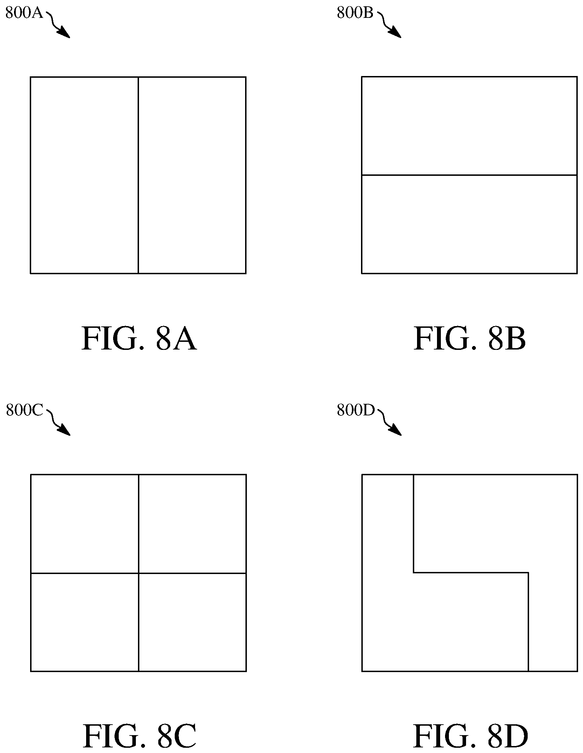

FIGS. 8A-D are diagrams of examples of blocks 800A, 800B, 800C, 800D divided into partitions for coding using compound intra prediction. The blocks 800A, 800B, 800C, 800D may show different partitions for the same block to be encoded or decoded. Alternatively, the blocks 800A, 800B, 800C, 800D may show partitions of different blocks to be encoded or decoded. In FIG. 8A, the block 800A is shown with a vertical partition dividing the block 800A into a left partition and a right partition. For example, a first intra-prediction mode can be used to predict the motion in the left partition and a second intra-prediction mode can be used to predict the motion in the right partition. In FIG. 8B, the block 800B is shown with a horizontal partition dividing the block 800B into an upper partition and a lower partition. For example, a first intra-prediction mode can be used to predict the motion in the upper partition and a second intra-prediction mode can be used to predict the motion in the lower partition.

However, there may be more than one partition used to divide a block to be coded, such as where more than two intra-prediction modes are selected for the coding. In FIG. 8C, the block 800C is shown with horizontal and vertical partitions dividing the block 800C into four quadrants. The use of the two partitions may result from four intra-prediction modes being selected for coding the block 800C. For example, a first intra-prediction mode can be used to predict the motion in the upper-left partition, a second intra-prediction mode can be used to predict the motion in the upper-right partition, a third intra-prediction mode can be used to predict the motion in the lower-left partition, and a fourth intra-prediction mode can be used to predict the motion in the lower-right partition.

Further, the partitions resulting from dividing a block to be coded may not be rectangular. In FIG. 8D, the block 800D is shown with two L-shaped non-rectangular partitions resulting from a combined vertical/horizontal division. For example, a first intra-prediction mode can be used to predict the motion in the leftmost non-rectangular partition and a second intra-prediction mode can be used to predict the motion in the rightmost non-rectangular partition. Other implementations of partitions resulting from dividing a block to be coded are possible. In some implementations, there may be more than two non-rectangular partitions. In some implementations, the partitions may not include to equal numbers of coefficients of the block. In some implementations, one or more partitions of the block may be defined in whole or in part by oblique or curved borders.

The aspects of encoding and decoding described above illustrate some examples of encoding and decoding techniques. However, it is to be understood that encoding and decoding, as those terms are used in the claims, could mean compression, decompression, transformation, or any other processing or change of data.

The word "example" is used herein to mean serving as an example, instance, or illustration. Any aspect or design described herein as "example" is not necessarily to be construed as being preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise or clearly indicated otherwise by the context, the statement "X includes A or B" is intended to mean any of the natural inclusive permutations thereof. That is, if X includes A; X includes B; or X includes both A and B, then "X includes A or B" is satisfied under any of the foregoing instances. In addition, the articles "a" and "an" as used in this application and the appended claims should generally be construed to mean "one or more," unless specified otherwise or clearly indicated by the context to be directed to a singular form. Moreover, use of the term "an implementation" or the term "one implementation" throughout this disclosure is not intended to mean the same embodiment or implementation unless described as such.

Implementations of the transmitting station 102 and/or the receiving station 106 (and the algorithms, methods, instructions, etc.. stored thereon and/or executed thereby, including by the encoder 400 and the decoder 500) can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably. Further, portions of the transmitting station 102 and the receiving station 106 do not necessarily have to be implemented in the same manner.

Further, in one aspect, for example, the transmitting station 102 or the receiving station 106 can be implemented using a general purpose computer or general purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

The transmitting station 102 and the receiving station 106 can, for example, be implemented on computers in a video conferencing system. Alternatively, the transmitting station 102 can be implemented on a server, and the receiving station 106 can be implemented on a device separate from the server, such as a handheld communications device. In this instance, the transmitting station 102, using an encoder 400, can encode content into an encoded video signal and transmit the encoded video signal to the communications device. In turn, the communications device can then decode the encoded video signal using a decoder 500. Alternatively, the communications device can decode content stored locally on the communications device, for example, content that was not transmitted by the transmitting station 102. Other suitable transmitting and receiving implementation schemes are available. For example, the receiving station 106 can be a generally stationary personal computer rather than a portable communications device, and/or a device including an encoder 400 may also include a decoder 500.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or semiconductor device. Other suitable mediums are also available.

The above-described embodiments, implementations, and aspects have been described in order to facilitate easy understanding of this disclosure and do not limit this disclosure.

## Claims

1. A method for encoding a current block (310, 800D) of a video frame,
the method comprising:
selecting (602), based on a plurality of directions of motion within the video frame, a first intra-prediction mode and a second intra-prediction mode, wherein the first intra-prediction mode performs prediction of motion of the block along a first direction of the plurality of directions of motion and the second intra-prediction mode performs prediction of the motion of the block along a second direction of the plurality of directions of motion, wherein the first and second directions are different directions of the plurality of directions of motion with respect to the pixel values of the current block;
generating (606) a compound prediction block for encoding the current block, the current block being divided into a non-rectangular first partition and a non-rectangular second partition according to partition data that indicates how to partition a block to be coded using a combination of the first and second intra-prediction modes, by:
forming (604) a first prediction block using the first intra-prediction mode that performs prediction of the motion of the block along the first direction of the plurality of directions of motion, a portion of the first prediction block corresponding to the first non-rectangular partition;
forming a second prediction block using the second intra-prediction mode that performs prediction of the motion of the block along the second direction of the plurality of directions of motion, a portion of the second prediction block corresponding to the second non-rectangular partition; and
combining the portion of the first prediction block corresponding to the first non-rectangular partition and the portion of the second prediction block corresponding to the non-rectangular second partition; and
encoding (608) the current block using the compound prediction block.

2. The method of claim 1, wherein selecting the first intra-prediction mode and the second intra-prediction mode based on motion of the block within the video frame comprises:
for each of one or more combinations of intra-prediction modes, determining a respective rate-distortion value resulting from predicting the motion of the block within the video frame using that combination of intra-prediction modes; and
determining that a combination including the first intra-prediction mode and the second intra-prediction mode results in a lowest one of the rate-distortion values.

3. The method of claim 1, wherein the current block is divided into the first partition and the second partition according to partitioning definitions of an encoder used to encode the current block.

4. The method of any preceding claim, wherein the non-rectangular first partition and the non-rectangular second partition are L-shaped partitions resulting from a combined vertical/horizontal division.

5. A method for decoding an encoded block (310, 800D) of an encoded video frame,
the method comprising:
selecting, based on a plurality of directions of motion within the encoded video frame, a first intra-prediction mode and a second intra-prediction mode, wherein the first intra-prediction mode performs prediction of motion of the block along a first direction of the plurality of directions of motion and the second intra-prediction mode performs prediction of the motion of the block along a second direction of the plurality of directions of motion, wherein the first and second directions are different directions of the plurality of directions of motion with respect to the pixel values of the encoded block;
generating a compound prediction block for the encoded block, the encoded block being divided into a non-rectangular first partition and a non-rectangular second partition according to partition data that indicates how to partition a block to be coded using combinations of the first and second intra-prediction modes, by:
forming a first prediction block using the first intra-prediction mode that performs prediction of the motion of the block along the first direction of the plurality of directions of motion, a portion of the first prediction block corresponding to the first non-rectangular partition;
forming a second prediction block using the second intra-prediction mode that performs prediction of the motion of the block along the second direction of the plurality of directions of motion, a portion of the second prediction block corresponding to the second non-rectangular partition; and
combining a portion of the first prediction block corresponding to the first non-rectangular partition and a portion of the second prediction block corresponding to the non-rectangular second partition; and
reconstructing the encoded block into a reconstructed block using the compound prediction block.

6. The method of claim 5, wherein selecting the first intra-prediction mode and the second intra-prediction mode based on motion of the block within the encoded video frame comprises:
decoding, from an encoded bitstream including the encoded video frame, one or more syntax elements indicating that the first infra-prediction mode that performs prediction of the motion of the block along the first direction of the plurality of directions of motion and the second intra-prediction mode that performs prediction of the motion of the block along the second direction of the plurality of directions of motion were used for encoding the encoded block.

7. The method of claim 5 or 6, wherein selecting the first intra-prediction mode and the second infra-prediction mode based on motion within the encoded video frame comprises:
for each of one or more combinations of intra-prediction modes, determining a respective rate-distortion value resulting from predicting the motion of the block within the encoded video frame using that combination of intra-prediction modes; and
determining that a combination including the first infra-prediction mode and the second intra-prediction mode results in a lowest one of the rate-distortion values.

8. The method of claim 5, wherein the encoded block is divided into the first partition and the second partition according to partitioning definitions of a decoder used to decode the encoded block.

9. The method of any of claims 5 to 8, wherein the first non-rectangular partition and the second non-rectangular partition are L-shaped partitions resulting from a combined vertical/horizontal division.

10. An apparatus for decoding an encoded block of an encoded video frame, the apparatus comprising:
a processor configured to execute instructions stored in a non-transitory storage medium to:
select (702), based on a plurality of directions of motion within the encoded video frame, a first infra-prediction mode and a second intra-prediction mode, wherein the first intra-prediction mode performs prediction of motion of the block along a first direction of the plurality of directions of motion and the second intra-prediction mode performs prediction of the motion of the block along a second direction of the plurality of directions of motion, wherein the first and second directions are different directions of the plurality of directions of motion with respect to the pixel values of the encoded block;
generate (704) a compound prediction block for the encoded block, the encoded block being divided into a non-rectangular first partition and a non-rectangular second partition according to partition data that indicates how to partition a block to be coded using combinations of the first and second intra-prediction modes, by:
forming a first prediction block using the first intra-prediction mode that performs prediction of the motion of the block along the first direction of the plurality of directions of motion, a portion of the first prediction block corresponding to the first non-rectangular partition;
forming a second prediction block using the second intra-prediction mode that performs prediction of the motion of the block along the second direction of the plurality of directions of motion, a portion of the second prediction block corresponding to the second non-rectangular partition; and
combining a portion of the first prediction block corresponding to the first non-rectangular partition and a portion of the second prediction block corresponding to the non-rectangular second partition; and
reconstructing the encoded block into a reconstructed block using the compound prediction block.

11. The apparatus of claim 10, wherein the instructions to select the first intra-prediction mode and the second intra-prediction mode based on motion of the block within the encoded video frame include instructions to:
decode, from an encoded bitstream including the encoded video frame, one or more syntax elements indicating that the first intra-prediction mode and the second intra-prediction mode were used for encoding the encoded block.

12. The apparatus of claim 10 or 11, wherein the instructions to select the first intra-prediction mode and the second intra-prediction mode based on motion of the block within the encoded video frame include instructions to:
for each of one or more combinations of intra-prediction modes, determine a respective rate-distortion value resulting from predicting the motion of the block within the encoded video frame using that combination of infra-prediction modes; and
determine that a combination including the first intra-prediction mode and the second intra-prediction mode results in a lowest one of the rate-distortion values; or
the encoded block is divided into the first partition and the second partition according to partitioning definitions of a decoder used to decode the encoded block.

13. The apparatus of any of claims 10 to 12, wherein the first non-rectangular partition and the second non-rectangular partition are L-shaped partitions resulting from a combined vertical/horizontal division.

14. An apparatus for encoding a current block of a video frame, the apparatus comprising:
a processor configured to execute instructions stored in a non-transitory storage medium to:
select, based on a plurality of directions of motion within the video frame, a first infra-prediction mode and a second infra-prediction mode, wherein the first intra-prediction mode performs prediction of motion of the block along a first direction of the plurality of directions of motion and the second intra-prediction mode performs prediction of the motion of the block along a second direction of the plurality of directions of motion, wherein the first and second directions are different directions of the plurality of directions of motion with respect to the pixel values of the current block;
generate a compound prediction block for encoding the current block, the current block being divided into a non-rectangular first partition and a non-rectangular second partition according to partition data that indicates how to partition a block to be coded using combinations of the first and second intra-prediction modes, by:
forming a first prediction block using the first intra-prediction mode that performs prediction of the motion of the block along the first direction of the plurality of directions of motion, a portion of the first prediction block corresponding to the first non-rectangular partition;
forming a second prediction block using the second infra-prediction mode that performs prediction of the motion of the block along the second direction of the plurality of directions of motion, a portion of the second prediction block corresponding to the second non-rectangular partition; and
combining a portion of the first prediction block corresponding to the first non-rectangular partition and a portion of the second prediction block corresponding to the non-rectangular second partition; and
encode the current block using the compound prediction block.

15. The apparatus of claim 14, wherein the non-rectangular first partition and the non-rectangular second partition are L-shaped partitions resulting from a combined vertical/horizontal division.

## Patentansprüche

1. Verfahren zum Codieren eines aktuellen Blocks (310, 800D) eines Videobildes, wobei das Verfahren Folgendes umfasst:
Auswählen (602) eines ersten Intraprädiktionsmodus und eines zweiten Intraprädiktionsmodus auf Grundlage einer Vielzahl von Bewegungsrichtungen innerhalb des Videobildes, wobei der erste Intraprädiktionsmodus Vorhersage der Bewegung des Blocks entlang einer ersten Richtung der Vielzahl von Bewegungsrichtungen durchführt und der zweite Intraprädiktionsmodus Vorhersage der Bewegung des Blocks entlang einer zweiten Richtung der Vielzahl von Bewegungsrichtungen durchführt, wobei die erste und die zweite Richtung unterschiedliche Richtungen der Vielzahl von Bewegungsrichtungen in Bezug auf die Pixelwerte des aktuellen Blocks sind;
Erzeugen (606) eines zusammengesetzten Prädiktionsblocks zum Codieren des aktuellen Blocks, wobei der aktuelle Block gemäß den Partitionsdaten, die angeben, wie ein zu codierender Block unter Verwendung einer Kombination der ersten und zweiten Intraprädiktionsmodi aufzuteilen ist, in eine nicht-rechteckige erste Partition und eine nicht-rechteckige zweite Partition unterteilt wird, durch:
Bilden (604) eines ersten Prädiktionsblocks unter Verwendung des ersten Intraprädiktionsmodus, der Vorhersage der Bewegung des Blocks entlang der ersten Richtung der Vielzahl von Bewegungsrichtungen durchführt, wobei ein Abschnitt des ersten Prädiktionsblocks der ersten nicht-rechteckigen Partition entspricht;
Bilden eines zweiten Prädiktionsblocks unter Verwendung des zweiten Intraprädiktionsmodus, der Vorhersage der Bewegung des Blocks entlang der zweiten Richtung der Vielzahl von Bewegungsrichtungen durchführt, wobei ein Abschnitt des zweiten Prädiktionsblocks der ersten nicht-rechteckigen Partition entspricht; und
Kombinieren des Abschnitts des ersten Prädiktionsblocks, der der ersten nicht-rechteckigen Partition entspricht, und des Abschnitts des zweiten Prädiktionsblocks, der der nicht-rechteckigen zweiten Partition entspricht; und
Codieren (608) des aktuellen Blocks unter Verwendung des zusammengesetzten Prädiktionsblocks.

2. Verfahren nach Anspruch 1, wobei das Auswählen des ersten Intraprädiktionsmodus und des zweiten Intraprädiktionsmodus auf Grundlage einer Bewegung des Blocks innerhalb des Videobildes Folgendes umfasst:
für jede von einer oder mehreren Kombinationen von Intraprädiktionsmodi Bestimmen eines entsprechenden Rate-Distortion-Wertes, der sich aus dem Vorhersagen der Bewegung des Blocks innerhalb des Videobildes unter Verwendung der Kombination von Intraprädiktionsmodi ergibt; und
Bestimmen, dass eine Kombination aus dem ersten Intraprädiktionsmodus und dem zweiten Intraprädiktionsmodus zu einem niedrigsten einen der Rate-Distortion-Werte führt.

3. Verfahren nach Anspruch 1, wobei der aktuelle Block gemäß den Partitionierungsdefinitionen eines zum Codieren des aktuellen Blocks verwendeten Codierers in eine erste Partition und eine zweite Partition unterteilt wird.

4. Verfahren nach einem vorhergehenden Anspruch, wobei es sich bei der nicht-rechteckigen ersten Partition und der nicht-rechteckigen zweiten Partition um L-förmige Partitionen handelt, die aus einer kombinierten vertikalen/horizontalen Teilung resultieren.

5. Verfahren zum Decodieren eines codierten Blocks (310, 800D) eines codierten Videobildes, wobei das Verfahren Folgendes umfasst:
Auswählen eines ersten Intraprädiktionsmodus und eines zweiten Intraprädiktionsmodus auf Grundlage einer Vielzahl von Bewegungsrichtungen innerhalb des codierten Videobildes, wobei der erste Intraprädiktionsmodus Vorhersage der Bewegung des Blocks entlang einer ersten Richtung der Vielzahl von Bewegungsrichtungen durchführt und der zweite Intraprädiktionsmodus Vorhersage der Bewegung des Blocks entlang einer zweiten Richtung der Vielzahl von Bewegungsrichtungen durchführt, wobei die erste und die zweite Richtung unterschiedliche Richtungen der Vielzahl von Bewegungsrichtungen in Bezug auf die Pixelwerte des codierten Blocks sind;
Erzeugen eines zusammengesetzten Prädiktionsblock für den codierten Blocks, wobei der codierte Block gemäß den Partitionsdaten, die angeben, wie ein zu codierender Block unter Verwendung von Kombinationen der ersten und zweiten Intraprädiktionsmodi aufzuteilen ist, in eine nicht-rechteckige erste Partition und eine nicht-rechteckige zweite Partition unterteilt wird, durch:
Bilden eines ersten Prädiktionsblocks unter Verwendung des ersten Intraprädiktionsmodus, der Vorhersage der Bewegung des Blocks entlang der ersten Richtung der Vielzahl von Bewegungsrichtungen durchführt, wobei ein Abschnitt des ersten Prädiktionsblocks der ersten nicht-rechteckigen Partition entspricht;
Bilden eines zweiten Prädiktionsblocks unter Verwendung des zweiten Intraprädiktionsmodus, der Vorhersage der Bewegung des Blocks entlang der zweiten Richtung der Vielzahl von Bewegungsrichtungen durchführt, wobei ein Abschnitt des zweiten Prädiktionsblocks der ersten nicht-rechteckigen Partition entspricht; und
Kombinieren eines Abschnitts des ersten Prädiktionsblocks, der der ersten nicht-rechteckigen Partition entspricht, und eines Abschnitts des zweiten Prädiktionsblocks, der der nicht-rechteckigen zweiten Partition entspricht; und
Rekonstruieren des codierten Blocks zu einem rekonstruierten Block unter Verwendung des zusammengesetzten Prädiktionsblocks.

6. Verfahren nach Anspruch 5, wobei das Auswählen des ersten Intraprädiktionsmodus und des zweiten Intraprädiktionsmodus auf Grundlage einer Bewegung des Blocks innerhalb des codierten Videobildes Folgendes umfasst:
Decodieren eines oder mehrere Syntaxelemente aus einem das codierte Videobild enthaltendem codierten Bitstrom, die angeben, dass der erste Infraprädiktionsmodus, der Vorhersage der Bewegung des Blocks entlang der ersten Richtung der Vielzahl von Bewegungsrichtungen durchführt, und der zweite Intraprädiktionsmodus, der Vorhersage der Bewegung des Blocks entlang der zweiten Richtung der Vielzahl von Bewegungsrichtungen durchführt, zum Codieren des codierten Blocks verwendet wurden.

7. Verfahren nach Anspruch 5 oder 6, wobei das Auswählen des ersten Intraprädiktionsmodus und des zweiten Intraprädiktionsmodus auf Grundlage einer Bewegung innerhalb des Videobildes Folgendes umfasst:
für jede von einer oder mehreren Kombinationen von Intraprädiktionsmodi Bestimmen eines entsprechenden Rate-Distortion-Wertes, der sich aus dem Vorhersagen der Bewegung des Blocks innerhalb des codierten Videobildes unter Verwendung der Kombination von Intraprädiktionsmodi ergibt; und
Bestimmen, dass eine Kombination aus dem ersten Intraprädiktionsmodus und dem zweiten Intraprädiktionsmodus zu einem niedrigsten einen der Rate-Distortion-Werte führt.

8. Verfahren nach Anspruch 5, wobei der codierte Block gemäß den Partitionierungsdefinitionen eines zum Decodieren des codierten Blocks verwendeten Decodierers in eine erste Partition und eine zweite Partition unterteilt wird.

9. Verfahren nach einem der Ansprüche 5 oder 8, wobei es sich bei der nicht-rechteckigen ersten Partition und der nicht-rechteckigen zweiten Partition um L-förmige Partitionen handelt, die sich aus einer kombinierten vertikalen/horizontalen Teilung ergeben.

10. Vorrichtung zum Decodieren eines codierten Blocks eines codierten Videobildes, wobei die Vorrichtung Folgendes umfasst:
einen Prozessor, der dazu konfiguriert ist, in einem nichttransitorischen Speichermedium gespeicherte Anweisungen zu Folgendem auszuführen:
Auswählen (702) eines ersten Intraprädiktionsmodus und eines zweiten Intraprädiktionsmodus auf Grundlage einer Vielzahl von Bewegungsrichtungen innerhalb des codierten Videobildes, wobei der erste Intraprädiktionsmodus Vorhersage der Bewegung des Blocks entlang einer ersten Richtung der Vielzahl von Bewegungsrichtungen durchführt und der zweite Intraprädiktionsmodus Vorhersage der Bewegung des Blocks entlang einer zweiten Richtung der Vielzahl von Bewegungsrichtungen durchführt, wobei die erste und die zweite Richtung unterschiedliche Richtungen der Vielzahl von Bewegungsrichtungen in Bezug auf die Pixelwerte des codierten Blocks sind;
Erzeugen (704) eines zusammengesetzten Prädiktionsblocks für den codierten Blocks, wobei der codierte Block gemäß den Partitionsdaten, die angeben, wie ein zu codierender Block unter Verwendung von Kombinationen der ersten und zweiten Intraprädiktionsmodi aufzuteilen ist, in eine nicht-rechteckige erste Partition und eine nicht-rechteckige zweite Partition unterteilt wird, durch:
Bilden eines ersten Prädiktionsblocks unter Verwendung des ersten Intraprädiktionsmodus, der Vorhersage der Bewegung des Blocks entlang der ersten Richtung der Vielzahl von Bewegungsrichtungen durchführt, wobei ein Abschnitt des ersten Prädiktionsblocks der ersten nicht-rechteckigen Partition entspricht;
Bilden eines zweiten Prädiktionsblocks unter Verwendung des zweiten Intraprädiktionsmodus, der Vorhersage der Bewegung des Blocks entlang der zweiten Richtung der Vielzahl von Bewegungsrichtungen durchführt, wobei ein Abschnitt des zweiten Prädiktionsblocks der ersten nicht-rechteckigen Partition entspricht; und
Kombinieren eines Abschnitts des ersten Prädiktionsblocks, der der ersten nicht-rechteckigen Partition entspricht, und eines Abschnitts des zweiten Prädiktionsblocks, der der nicht-rechteckigen zweiten Partition entspricht; und
Rekonstruieren des codierten Blocks zu einem rekonstruierten Block unter Verwendung des zusammengesetzten Prädiktionsblocks.

11. Vorrichtung nach Anspruch 10, wobei die Anweisungen zum Auswählen des ersten Intraprädiktionsmodus und des zweiten Intraprädiktionsmodus auf Grundlage einer Bewegung des Blocks innerhalb des codierten Videobildes Anweisungen zu Folgendem beinhalten:
Decodieren eines oder mehrerer Syntaxelemente von einem das codierte Videobild enthaltenden codierten Bildstrom, die angeben, dass der erste Intraprädiktionsmodus und der zweite Intraprädiktionsmodus zum Codieren des codierten Blocks verwendet wurden.

12. Vorrichtung nach Anspruch 10 oder 11, wobei die Anweisungen zum Auswählen des ersten Intraprädiktionsmodus und des zweiten Intraprädiktionsmodus auf Grundlage einer Bewegung des Blocks innerhalb des codierten Videobildes Anweisungen zu Folgendem beinhalten:
für jede von einer oder mehreren Kombinationen von Intraprädiktionsmodi Bestimmen eines entsprechenden Rate-Distortion-Wertes, der sich aus dem Vorhersagen der Bewegung des Blocks innerhalb des codierten Videobildes unter Verwendung der Kombination von Intraprädiktionsmodi ergibt; und
Bestimmen, dass eine Kombination aus dem ersten Intraprädiktionsmodus und dem zweiten Intraprädiktionsmodus zu einem niedrigsten einen der Rate-Distortion-Werte führt; oder
wobei der codierte Block gemäß den Partitionierungsdefinitionen eines zum Decodieren des codierten Blocks verwendeten Decodierers in eine erste Partition und eine zweite Partition unterteilt wird.

13. Vorrichtung nach einem der Ansprüche 10 bis 12, wobei es sich bei der nicht-rechteckigen ersten Partition und der nicht-rechteckigen zweiten Partition um L-förmige Partitionen handelt, die sich aus einer kombinierten vertikalen/horizontalen Teilung ergeben.

14. Vorrichtung zum Codieren eines aktuellen Blocks eines Videobildes, wobei die Vorrichtung Folgendes umfasst:
einen Prozessor, der dazu konfiguriert ist, in einem nichttransitorischen Speichermedium gespeicherte Anweisungen zu Folgendem auszuführen:
Auswählen eines ersten Intraprädiktionsmodus und eines zweiten Intraprädiktionsmodus auf Grundlage einer Vielzahl von Bewegungsrichtungen innerhalb des Videobildes, wobei der erste Intraprädiktionsmodus Vorhersage der Bewegung des Blocks entlang einer ersten Richtung der Vielzahl von Bewegungsrichtungen durchführt und der zweite Intraprädiktionsmodus Vorhersage der Bewegung des Blocks entlang einer zweiten Richtung der Vielzahl von Bewegungsrichtungen durchführt, wobei die erste und die zweite Richtung unterschiedliche Richtungen der Vielzahl von Bewegungsrichtungen in Bezug auf die Pixelwerte des aktuellen Blocks sind;
Erzeugen eines zusammengesetzten Prädiktionsblock zum Codieren des aktuellen Blocks, wobei der aktuelle Block gemäß den Partitionsdaten, die angeben, wie ein zu codierender Block unter Verwendung von Kombinationen der ersten und zweiten Intraprädiktionsmodi aufzuteilen ist, in eine nicht-rechteckige erste Partition und eine nicht-rechteckige zweite Partition unterteilt wird, durch:
Bilden eines ersten Prädiktionsblocks unter Verwendung des ersten Intraprädiktionsmodus, der Vorhersage der Bewegung des Blocks entlang der ersten Richtung der Vielzahl von Bewegungsrichtungen durchführt wobei ein Abschnitt des ersten Prädiktionsblocks der ersten nicht-rechteckigen Partition entspricht;
Bilden eines zweiten Prädiktionsblocks unter Verwendung des zweiten Intraprädiktionsmodus, der Vorhersage der Bewegung des Blocks entlang der zweiten Richtung der Vielzahl von Bewegungsrichtungen durchführt, wobei ein Abschnitt des zweiten Prädiktionsblocks der ersten nicht-rechteckigen Partition entspricht; und
Kombinieren eines Abschnitts des ersten Prädiktionsblocks, der der ersten nicht-rechteckigen Partition entspricht, und eines Abschnitts des zweiten Prädiktionsblocks, der der nicht-rechteckigen zweiten Partition entspricht; und
Codieren des aktuellen Blocks unter Verwendung des zusammengesetzten Prädiktionsblocks.

15. Vorrichtung nach Anspruch 14, wobei es sich bei der nicht-rechteckigen ersten Partition und der nicht-rechteckigen zweiten Partition um L-förmige Partitionen handelt, die sich aus einer kombinierten vertikalen/horizontalen Teilung ergeben.

## Revendications

1. Procédé d'encodage d'un bloc courant (310, 800D) d'une image vidéo, le procédé comprenant :
la sélection (602), sur la base d'une pluralité de directions de mouvement au sein de l'image vidéo, d'un premier mode de prédiction intra et d'un second mode de prédiction intra, dans lequel le premier mode de prédiction intra réalise une prédiction du mouvement du bloc selon une première direction de la pluralité de directions de mouvement et le second mode de prédiction intra réalise une prédiction du mouvement du bloc selon une seconde direction de la pluralité de directions de mouvement, dans lequel les première et seconde directions constituent des directions distinctes de la pluralité de directions de mouvement en ce qui concerne les valeurs de pixels du bloc courant ;
la génération (606) d'un bloc de prédiction composé destiné à l'encodage du bloc courant, le bloc courant étant divisé en une première partition non rectangulaire et une seconde partition non rectangulaire selon des données de partition indiquant comment partitionner un bloc devant être codé à l'aide d'une combinaison des premier et second modes de prédiction intra, en :
formant (604) un premier bloc de prédiction à l'aide du premier mode de prédiction intra réalisant une prédiction du mouvement du bloc selon la première direction de la pluralité de directions de mouvement, une portion du premier bloc de prédiction correspondant à la première partition non rectangulaire ;
formant un second bloc de prédiction à l'aide du second mode de prédiction intra réalisant une prédiction du mouvement du bloc selon la seconde direction de la pluralité de directions de mouvement, une portion du second bloc de prédiction correspondant à la seconde partition non rectangulaire ; et
en combinant la portion du premier bloc de prédiction correspondant à la première partition non rectangulaire et la portion du second bloc de prédiction correspondant à la seconde partition non rectangulaire ; et
en encodant (608) le bloc courant à l'aide du bloc de prédiction composé.

2. Procédé selon la revendication 1, dans lequel la sélection du premier mode de prédiction intra et du second mode de prédiction intra sur la base du mouvement du bloc au sein de l'image vidéo comprend :
pour chacune des une ou plusieurs combinaisons de modes de prédiction intra, la détermination d'une valeur de taux-distorsion respective résultant de la prédiction du mouvement du bloc au sein de l'image vidéo à l'aide de la combinaison de modes de prédiction intra ; et
la détermination qu'une combinaison comportant le premier mode de prédiction intra et le second mode de prédiction intra aboutit à la plus faible des valeurs de taux-distorsion.

3. Procédé selon la revendication 1, dans lequel le bloc courant est divisé en la première partition et la seconde partition selon des définitions de partitionnement d'un encodeur utilisé pour encoder le bloc courant.

4. Procédé selon l'une quelconque des revendications précédentes, dans lequel la première partition non rectangulaire et la seconde partition non rectangulaire sont des partitions en forme de L résultant d'une division combinée verticale/horizontale.

5. Procédé de décodage d'un bloc encodé (310, 800D) d'une image vidéo encodée, le procédé comprenant :
la sélection, sur la base d'une pluralité de directions de mouvement au sein de l'image vidéo encodée, d'un premier mode de prédiction intra et d'un second mode de prédiction intra, dans lequel le premier mode de prédiction intra réalise une prédiction du mouvement du bloc selon une première direction de la pluralité de directions de mouvement et le second mode de prédiction intra réalise une prédiction du mouvement du bloc selon une seconde direction de la pluralité de directions de mouvement, dans lequel les première et seconde directions constituent des directions distinctes de la pluralité de directions de mouvement en ce qui concerne les valeurs de pixels du bloc courant ;
la génération d'un bloc de prédiction composé pour le bloc encodé, le bloc encodé étant divisé en une première partition non rectangulaire et une seconde partition non rectangulaire selon des données de partition indiquant comment partitionner un bloc devant être codé à l'aide d'une combinaison des premier et second modes de prédiction intra, en :
formant un premier bloc de prédiction à l'aide du premier mode de prédiction intra réalisant une prédiction du mouvement du bloc selon la première direction de la pluralité de directions de mouvement, une portion du premier bloc de prédiction correspondant à la première partition non rectangulaire ;
formant un second bloc de prédiction à l'aide du second mode de prédiction intra réalisant une prédiction du mouvement du bloc selon la seconde direction de la pluralité de directions de mouvement, une portion du second bloc de prédiction correspondant à la seconde partition non rectangulaire ; et
en combinant une portion du premier bloc de prédiction correspondant à la première partition non rectangulaire et une portion du second bloc de prédiction correspondant à la seconde partition non rectangulaire ; et
en reconstruisant le bloc encodé en un bloc reconstruit à l'aide du bloc de prédiction composé.

6. Procédé selon la revendication 5, dans lequel la sélection du premier mode de prédiction intra et du second mode de prédiction intra sur la base du mouvement du bloc au sein de l'image vidéo encodée comprend :
le décodage, à partir d'un flux binaire encodé comportant l'image vidéo encodée, d'un ou plusieurs éléments de syntaxe indiquant que le premier mode de prédiction intra réalisant une prédiction du mouvement du bloc selon la première direction de la pluralité de directions de mouvement et le second mode de prédiction intra réalisant une prédiction du mouvement du bloc selon la seconde direction de la pluralité de directions de mouvement ont été utilisés pour l'encodage du bloc encodé.

7. Procédé selon l'une quelconque des revendications 5 ou 6, dans lequel la sélection du premier mode de prédiction intra et du second mode de prédiction intra sur la base du mouvement au sein de l'image vidéo encodée comprend :
pour chacune des une ou plusieurs combinaisons de modes de prédiction intra, la détermination d'une valeur de taux-distorsion respective résultant de la prédiction du mouvement du bloc au sein de l'image vidéo encodée à l'aide de la combinaison de modes de prédiction intra ; et
la détermination qu'une combinaison comportant le premier mode de prédiction infra et le second mode de prédiction intra aboutit à la plus faible des valeurs de taux-distorsion.

8. Procédé selon la revendication 5, dans lequel le bloc encodé est divisé en la première partition et la seconde partition selon des définitions de partitionnement d'un décodeur utilisé pour décoder le bloc encodé.

9. Procédé selon l'une quelconque des revendications 5 à 8, dans lequel la première partition non rectangulaire et la seconde partition non rectangulaire sont des partitions en forme de L résultant d'une division combinée verticale/horizontale.

10. Appareil de décodage d'un bloc encodé d'une image vidéo encodée, le dispositif comprenant :
un processeur configuré pour exécuter des instructions stockées dans un support de stockage non transitoire pour :
sélectionner (702), sur la base d'une pluralité de directions de mouvement au sein de l'image vidéo encodée, un premier mode de prédiction intra et un second mode de prédiction intra, dans lequel le premier mode de prédiction intra réalise une prédiction du mouvement du bloc selon une première direction de la pluralité de directions de mouvement et le second mode de prédiction intra réalise une prédiction du mouvement du bloc selon une seconde direction de la pluralité de directions de mouvement, dans lequel les première et seconde directions constituent des directions distinctes de la pluralité de directions de mouvement en ce qui concerne les valeurs de pixels du bloc encodé ;
générer (704) un bloc de prédiction composé pour le bloc encodé, le bloc encodé étant divisé en une première partition non rectangulaire et une seconde partition non rectangulaire selon des données de partition indiquant comment partitionner un bloc devant être codé à l'aide d'une combinaison des premier et second modes de prédiction intra, en :
formant un premier bloc de prédiction à l'aide du premier mode de prédiction intra réalisant une prédiction du mouvement du bloc selon la première direction de la pluralité de directions de mouvement, une portion du premier bloc de prédiction correspondant à la première partition non rectangulaire ;
formant un second bloc de prédiction à l'aide du second mode de prédiction intra réalisant une prédiction du mouvement du bloc selon la seconde direction de la pluralité de directions de mouvement, une portion du second bloc de prédiction correspondant à la seconde partition non rectangulaire ; et
en combinant une portion du premier bloc de prédiction correspondant à la première partition non rectangulaire et une portion du second bloc de prédiction correspondant à la seconde partition non rectangulaire ; et
en reconstruisant le bloc encodé en un bloc reconstruit à l'aide du bloc de prédiction composé.

11. Appareil selon la revendication 10, dans lequel les instructions de sélection du premier mode de prédiction intra et du second mode de prédiction intra sur la base du mouvement du bloc au sein de l'image vidéo encodée comportent des instructions pour :
décoder, à partir d'un flux binaire encodé comportant l'image vidéo encodée, un ou plusieurs éléments de syntaxe indiquant que le premier mode de prédiction intra et le second mode de prédiction intra ont été utilisés pour l'encodage du bloc encodé.

12. Appareil selon la revendication 10 ou 11, dans lequel les instructions de sélection du premier mode de prédiction intra et du second mode de prédiction intra sur la base du mouvement du bloc au sein de l'image vidéo encodée comportent des instructions pour :
pour chacune des une ou plusieurs combinaisons de modes de prédiction intra, déterminer une valeur de taux-distorsion respective résultant de la prédiction du mouvement du bloc au sein de l'image vidéo encodée à l'aide de la combinaison de modes de prédiction intra ; et
déterminer qu'une combinaison comportant le premier mode de prédiction intra et le second mode de prédiction intra aboutit à la plus faible des valeurs de taux-distorsion ; ou
le bloc encodé est divisé en la première partition et la seconde partition selon des définitions de partitionnement d'un décodeur utilisé pour décoder le bloc encodé.

13. Appareil selon l'une quelconque des revendications 10 à 12, dans lequel la première partition non rectangulaire et la seconde partition non rectangulaire sont des partitions en forme de L résultant d'une division combinée verticale/horizontale.

14. Appareil d'encodage d'un bloc courant d'une image vidéo, le dispositif comprenant :
un processeur configuré pour exécuter des instructions stockées dans un support de stockage non transitoire pour :
sélectionner, sur la base d'une pluralité de directions de mouvement au sein de l'image vidéo, un premier mode de prédiction intra et un second mode de prédiction intra, dans lequel le premier mode de prédiction intra réalise une prédiction du mouvement du bloc selon une première direction de la pluralité de directions de mouvement et le second mode de prédiction intra réalise une prédiction du mouvement du bloc selon une seconde direction de la pluralité de directions de mouvement, dans lequel les première et seconde directions constituent des directions distinctes de la pluralité de directions de mouvement en ce qui concerne les valeurs de pixels du bloc courant ;
générer un bloc de prédiction composé destiné à l'encodage du bloc courant, le bloc courant étant divisé en une première partition non rectangulaire et une seconde partition non rectangulaire selon des données de partition indiquant comment partitionner un bloc devant être codé à l'aide d'une combinaison des premier et second modes de prédiction intra, en :
formant un premier bloc de prédiction à l'aide du premier mode de prédiction intra réalisant une prédiction du mouvement du bloc selon la première direction de la pluralité de directions de mouvement, une portion du premier bloc de prédiction correspondant à la première partition non rectangulaire ;
formant un second bloc de prédiction à l'aide du second mode de prédiction infra réalisant une prédiction du mouvement du bloc selon la seconde direction de la pluralité de directions de mouvement, une portion du second bloc de prédiction correspondant à la seconde partition non rectangulaire ; et
en combinant une portion du premier bloc de prédiction correspondant à la première partition non rectangulaire et une portion du second bloc de prédiction correspondant à la seconde partition non rectangulaire ; et
en encodant le bloc courant à l'aide du bloc de prédiction composé.

15. Appareil selon la revendication 14, dans lequel la première partition non rectangulaire et la seconde partition non rectangulaire sont des partitions en forme de L résultant d'une division combinée verticale/horizontale.
